# EUROPÄISCHE PATENTANMELDUNG

(11) **EP 4 431 586 A1**
(43) Veröffentlichungstag der Anmeldung: **18.09.2024**
(21) Anmeldenummer: 23162072.5
(22) Anmeldetag: 15.03.2023
(51) Int. Cl.: C10M 169/00, C08K 5/523, C07F 9/09, C07F 9/12, C10M 137/04, C08K 5/00

(54) **TRIPHENYLPHOSPHAT-FREIE MISCHUNGEN FÜR FLAMMWIDRIGES WEICH-PVC**

(71) Anmelder: LANXESS Deutschland GmbH, 50569 Köln (DE)
(72) Erfinder: Omann, Lukas, 50931 Köln (DE); Mauerer, Otto, 42799 Leichlingen (DE); Hansel, Jan-Gerd, 51469 Bergisch Gladbach (DE)

(57) **Zusammenfassung**

Mischungen enthaltend mindestens zwei Substanzen der allgemeinen Formel (I)

(R¹O)ₙ(R²O)ₒ(R³O)ₚP=O (I)

worin n, o und p jeweils 0, 1, 2 oder 3 sein können und die Summe von n, o und p 3 ist, und R¹, R² und R³ unabhängig voneinander ausgewählt sind aus den Resten 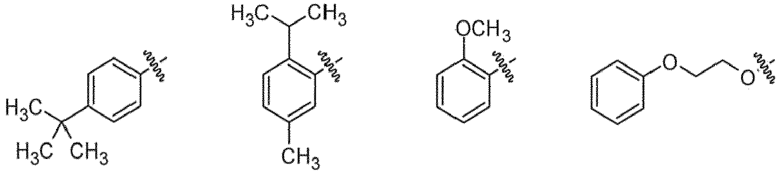 zeigen eine einzigartige Kombination aus niederem Phosphorgehalt bei gleichzeitig hoher Flammwidrigkeit und weichmachender Wirkung, aufgrund derer sie sich für eine Verwendung als Flammschutzmittel in PVC-Compounds, als Hydraulikflüssigkeit, als Schmierstoffadditiv oder als Additiv für Lacke, Klebstoffe, Dichtmassen oder Beschichtungen empfehlen.

## Beschreibung

Phosphorsäureester können in verschiedenen technischen Anwendungen eingesetzt werden, z.B. als Schmierstoffe (vgl. US 10,414,964 B2), Hydraulikflüssigkeiten (vgl. US 6,703,355 B2), Weichmacher (vgl. DE 1 768 076) oder als Flammschutzmittel (vgl. US 8,129,457 B2).

Die Flammschutzwirkung von Phosphorsäureestern wurde bereits in verschiedenen Kunststoffen, z.B. in PVC (vgl. GB 2 302 543 A), in Polyolefinen (vgl. US 11,008,440 B2), in Celluloseestern (US 9,000,148 B2), in Polyurethanen (vgl. US 8,129,457 B2) oder in Stryrolpolymeren (vgl. US 8,026,303 B2) gezeigt.

Im Stand der Technik sind verschiedene Arten von Phosphorsäureestern und deren Verwendung als Flammschutzmittel beschrieben. Diese Ester werden aus aromatischen und/oder aliphatischen Alkoholen aufgebaut. Oft werden Mischungen verschiedener Alkohole eingesetzt, die dann zu Mischungen bestehend aus den unterschiedlich kombinierten Ester führen.

Für die Anwendung als Flammschutzmittel in PVC haben sich Zusammensetzungen bestehend aus Phosphorsäuretriarylestern und/oder Phosphorsäurealkyl-arylestern bewährt. Dabei leiten sich aus wirtschaftlichen wie auch aus anwendungstechnischen Gründen die Arylreste in diesen Produkten immer zumindest teilweise von Phenol oder von Kresol ab. Tatsächlich wird im Stand der Technik von der Verwendung ausschließlich höher substituierter Phenole sogar eindringlich abgeraten (siehe z.B. WO 2017140609 A1). Denn die daraus hergestellten Phosphorsäureester würden aufgrund ihres vergleichsweise geringen Phosphorgehalts eine geringe Flammschutzwirkung zeigen.

Nachteilig an phenolbasierten Mischungen ist ihr Gehalt an Triphenylphosphat ("TPP"), das synthesebedingt zwangsläufig zumindest in geringen Mengen enthalten ist. Die Gefahrstoffeigenschaften dieser Substanz haben dazu geführt, dass Triphenylphosphathaltige Materialien in verbrauchernahen Anwendungen immer weniger akzeptiert werden. Im Stand der Technik sind daher verschiedene Verfahren beschrieben, um den Gehalt an TPP in Mischungen zu senken:
So wird beispielsweise in WO 2017140609 A1 ein Zweistufenverfahren beschrieben, in dem Phosphoroxychlorid mit einem Unterschuss an Alkylphenolen vorreagiert wird, bevor die so erhaltene Reaktionsmischung mit Phenol vollständig umgesetzt wird. Die so hergestellten Produkte enthielten jedoch noch mindestens 0,1 Gew% TPP. Zudem stellt die zusätzliche Verfahrensstufe einen Mehraufwand dar.

In EP 0 573 082 B1 ist die Aufreinigung von TPP-haltigen Mischung durch Destillation beschrieben. Der zusätzliche Verfahrensschritt führt jedoch zu erhöhten Fertigungskosten. Zudem lag der TPP-Gehalt der so aufgereinigten Produkte immer noch über 1 Gew%.

Auch der Einsatz kresolbasierter Mischungen ist aus toxikologischen und regulatorischen Gesichtspunkten problematisch, da ortho-Kresylphosphate hoch neurotoxisch wirken (siehe z.B. I. van der Veen, J. de Boer Chemosphere 2012, 88, 1119-1153). Die zur Herstellung von Phosphorsäureestern verwendete Kresolfraktion muss daher praktisch frei von ortho-Kresol sein, was einen erheblichen technischen Aufwand erfordert.

Um die genannten Nachteile im Stand der Technik zu überwinden, sind phenol- und kresolfreie Alternativen wünschenswert.

Da die Herstellung von Phosphor sowohl kosten- als auch energieintensiv ist, besteht ein Bedarf insbesondere an Flammschutzmittel, die mit einem geringen Phosphorgehalt auskommen.

Aufgabe der vorliegenden Erfindung war es daher, Mischungen als Flammschutzmittel für Kunststoffe, insbesondere für PVC-Formmassen bereitzustellen, die ganz oder nahezu frei von Triphenylphosphat und Trikresylphosphaten sind und bei vergleichbarer Flammschutzwirkung einen geringeren Phosphorgehalt aufweisen.

Diese Aufgabe wird gelöst durch Mischungen enthaltend mindestens zwei Substanzen der allgemeinen Formel (I)

(R¹O)ₙ(R²O)ₒ(R³O)ₚP=O (I)

worin n, o und p jeweils 0, 1, 2 oder 3 sein können und die Summe von n, o und p 3 ist, und R¹, R² und R³ unabhängig voneinander den Resten

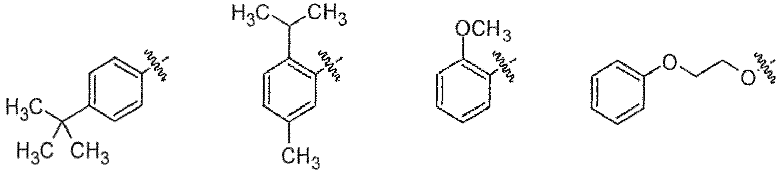

Entsprechen. In einer bevorzugten Ausführungsform haben diese zwei Substanzen mindestens einen der Reste R¹, R² oder R³ gemeinsam und bei mindestens einer der zwei Substanzen sind zwei verschiedene Reste vorhanden.

In einer weiteren Ausführungsform werden Mischungen von Phosphorsäureestern eingesetzt, bei denen alle vier der obigen Reste für R¹, R² und R³ in der Mischung enthalten sind (wobei selbstverständlich jedes Phosphoratom mit maximal drei verschiedenen Resten verbunden ist). Bevorzugt werden jedoch Mischungen enthaltend maximal drei dieser Reste und weiter bevorzugt Mischungen enthaltend zwei dieser Reste.

Bevorzugt enthalten die erfindungsgemäße Mischungen mindestens zwei Substanzen der allgemeinen Formel (I)

(R¹O)ₙ(R²O)ₒ₍R³O)ₚP=O (I)

worin n = 1, 2 oder 3, o = 0, 1 oder 2 und p = 0, wobei die Summe von n und o 3 ist, worin R¹ und R² unabhängig voneinander den Resten 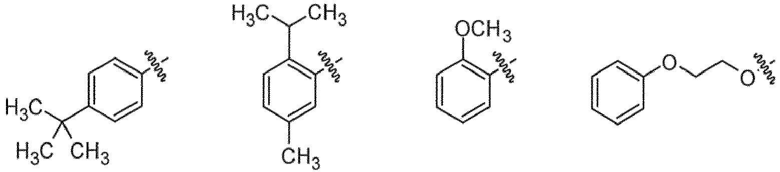 entsprechen. In einer bevorzugten Ausführungsform haben diese zwei Substanzen mindestens einen der Reste R¹ oder R² gemeinsam und mindestens eine der zwei Substanzen weist zwei verschiedene Reste R¹ oder R² auf.

In einer bevorzugten Ausführungsform beträgt der Gehalt an Triphenylphosphat und an Trikresylphosphaten bezogen auf das Gesamtgewicht der Mischung jeweils weniger als 1 Gew.-%, bevorzugt jeweils weniger als 0,2 Gew.-%, besonders bevorzugt jeweils weniger als 0,1 Gew.-% und meist bevorzugt jeweils weniger als 0,01 Gew.-%.

In einer weiteren bevorzugten Ausführungsform der Erfindung enthalten die erfindungsgemäßen Mischungen (R¹O)₃P=O, (R¹O)₂(R²O)P=O, (R¹O)(R²O)₂P=O und (R²O)₃P=O sowie gegebenenfalls Nebenkomponenten, wie beispielsweise tert-Butylphenol, Thymol, Guajacol, Phenoxyethanol, Katalysatorbestandteile, oder Nebenprodukte.

In einer bevorzugten Ausführungsform enthalten die erfindungsgemäßen Mischungen

| | |
|---|---|
| (R¹O)₃P=O | 0 bis 30 Gew.-% |
| (R¹O)₂(R²O)P=O | 5 bis 90 Gew.-% |
| (R¹O)(R²O)₂P=O | 5 bis 90 Gew.-% |
| (R²O)₃P=O | 0 bis 30 Gew.-% |

jeweils bezogen auf das Gesamtgewicht der Verbindungen der Formel (I), vorzugsweise jeweils bezogen auf das Gesamtgewicht der Mischung, wobei R¹ und R² die oben genannten Bedeutungen haben.

Bevorzugt weist die erfindungsgemäßen Mischung eine Säurezahl kleiner 5 mg KOH/g, bevorzugt kleiner 1 mg KOH/g, besonders bevorzugt kleiner 0,5 mg KOH/g auf.

Bevorzugt weist die erfindungsgemäßen Mischung einen Phosphorgehalt bezogen auf die Gesamtmasse an enthaltenen Phosphorsäureestern von weniger als 8,0 Gew.-%, vorzugsweise weniger als 7,5 Gew.-%, weiter bevorzugt weniger als 7,2 Gew.-% auf.

Die erfindungsgemäßen Mischungen können in Analogie zu den bekannten Syntheseverfahren für Phosphorsäureester hergestellt werden, wie sie beispielsweise in Methoden der Organischen Chemie (Houben-Weyl), Thieme-Verlag, Stuttgart 1964, Band XII/2, S. 323 f beschrieben sind.

Die vorliegende Erfindung betrifft daher auch ein Verfahren zur Herstellung der erfindungsgemäßen Mischungen, wobei Phenole der Formeln R¹-OH, R²-OH und ggf. R³-OH mit POCl₃ zu Verbindungen der Formel (I) umgesetzt werden.

Die erfindungsgemäßen Mischungen können je nach Anwendung noch weitere Hilfsstoffe enthalten. Als Hilfsstoffe kommen zum Beispiel Weichmacher, weichmachende Polymere, polymere Modifikatoren, Stabilisatoren (z.B. Thermostabilisatoren, Lichtstabilisatoren, Antioxidantien), Co-Stabilisatoren (z.B. Säurefänger, Radikalfänger), innere und äußere Gleitmittel, Viskositätsregler, Füllstoffe, Farbpigmente, Farbstoffe, Flammschutzmittel, Flammschutzmittel-Synergisten, Treibmittel sowie weitere Funktionsadditive wie z.B. Antistatika, Nukleierungsmittel, UV-Schutzmittel oder Biozide, in Frage (siehe z.B. R. D. Maier, M. Schiller, Handbuch Kunststoff-Additive, 4. Auflage, München, Carl Hanser Verlag, 2016, S. 513 ff).

Überraschenderweise zeigte sich, dass sich die erfindungsgemäße Mischung gut zur Herstellung von Weich-PVC geeignet ist und trotz ihres niedrigen Phosphorgehalts eine hohe Flammschutzwirkung aufweist.

Die erfindungsgemäßen Mischungen eignen sich als Flammschutzmittel. Ein weiterer Gegenstand der vorliegenden Erfindung ist daher die Verwendung der erfindungsgemäßen Mischungen als Flammschutzmittel.

Die erfindungsgemäßen Mischungen können als Flammschutzmittel in allen dem Fachmann bekannten Anwendungen für Flammschutzmittel verwendet werden. Bevorzugt werden die erfindungsgemäße Mischungen als Flammschutzmittel für
- synthetische Polymere, wie Polyolefine, Polyvinylchlorid, Polycarbonate, Styrolbasierte (Co-)Polymere, Polyamide, Polyester, Polyurethane, Elastomere wie NBR, CR, SBR, oder EPDM und Duroplaste wie Epoxidharze, ungesättigte Polyesterharze und Phenol-Formaldehydharze,
- Werkstoffe pflanzlichen Ursprungs, wie Holz, Holz-Kunststoff-Komposite, Papier und Pappe, und
- Werkstoffe tierischen Ursprungs, wie Leder, verwendet.

Besonders bevorzugt werden die erfindungsgemäßen Mischungen als Flammschutzmittel für Polyvinylchlorid (PVC) verwendet, beispielsweise in PVC-Formmassen, d.h. in Zusammensetzungen enthaltend PVC welche in Form eines Granulats, eines Pulvers, einer Paste oder eines Plastisols vorliegen.

Gegenstand der Erfindung sind daher auch Zusammensetzungen vorzugsweise in Form eines Granulats, eines Pulvers, einer Paste oder eines Plastisols, enthaltend eine erfindungsgemäße Mischung und Polyvinylchlorid (PVC). Bevorzugt handelt es sich bei diesen erfindungsgemäßen PVC-Formmassen um Weich-PVC. Die erfindungsgemäßen PVC-Formmassen können hergestellt werden, indem man PVC mit den erfindungsgemäßen Mischungen und gegebenenfalls weiterer Hilfsstoffe, z.B. Stabilisatoren in an sich bekannter Weise (siehe z.B. G. Becker, D. Braun, Kunststoff-Handbuch, Polyvinylchlorid, Bd.2/2, München, Wien, Carl Hanser Verlag, 1986, S.829 ff) vermischt und compoundiert oder zu einem verarbeitungsbereiten Plastisol oder Organosol dispergiert.

Die erfindungsgemäße PVC-Formmasse enthält vorzugsweise 5 bis 150 Gewichtsteile, besonders bevorzugt 30 bis 70 Gewichtsteile an Phosphorsäureestern der Formel (I) bezogen auf 100 Gewichtsteile PVC. In einer bevorzugten Ausführungsform enthält die erfindungsgemäße PVC-Formmasse 5 bis 150 Gewichtsteile, besonders bevorzugt 30 bis 70 Gewichtsteile an Phosphorsäureestern der Formel (I) bezogen auf 100 Gewichtsteile PVC.

Die erfindungsgemäße PVC-Formmasse findet Anwendung in Beschichtungen, Folien, Kabel, Rohrleitungen, Schläuchen, Dichtungen, Förderbändern, Dachbahnen, Klebebandfolien, Planen, Markisen und Zelten.

Ein weiterer Gegenstand der Erfindung ist die Verwendung der erfindungsgemäßen Mischungen in Hydraulikflüssigkeiten oder zur Herstellung von Hydraulikflüssigkeiten. Bevorzugt werden die erfindungsgemäßen die Mischungen in flammwidrigen Hydraulikflüssigkeiten verwendet.

Ein weiterer Gegenstand der Erfindung ist die Verwendung der erfindungsgemäßen Mischungen als Schmierstoffadditiv. Bevorzugt werden die erfindungsgemäßen Mischungen in flammwidrigen Schmierstoffen verwendet.

Ein weiterer Gegenstand der Erfindung ist die Verwendung der erfindungsgemäßen Mischungen als Additiv für Lacke, Klebstoffe, Dichtmassen und Beschichtungen.

Ein weiterer Gegenstand der Erfindung ist die Verwendung der erfindungsgemäßen Mischungen als Wärmeträger oder in Zubereitungen, die als Wärmeträger verwendet werden. Bevorzugt werden die erfindungsgemäßen Mischungen als Wärmeträger oder in Wärmeträger-Zubereitungen in der Immersionskühlung elektrischer Komponenten verwendet. Die Wärmeträger-Zubereitungen enthalten neben den erfindungsgemäßen Mischungen beispielsweise weitere Trialkylphosphate, Triarylphosphate, Mineralöle, Polyalphaolefine, Ester, Antioxidantien, Metalldeaktivatoren, Fließadditive, Korrosionsinhibitoren, Schauminhibitoren, Demulgatoren undloder Pourpoint-Erniedriger.

### Beispiele

### Allgemeine Arbeitsvorschrift zur Darstellung der erfindungsgemäßen Mischungen

in einem Reaktor mit Rührer, Stickstoffeinleitung, Innenthermometer, Tropftrichter und Intensivkühler werden die Phenolbausteine vorgelegt und in Dichlormethan gelöst. Bei Raumtemperatur wird Triethylamin unter Rührung im Stickstoffgegenstrom zugesetzt. Nach beendeter Zugabe wird die Reaktionsmischung auf 2-8°C gekühlt und über einen Zeitraum von 1-2 h mit einer Lösung aus POCl₃ in Dichlormethan versetzt. Dabei wird eine Innentemperatur von 24°C nicht überschritten. Nach beendeter Zugabe wird noch 1 h bei Raumtemperatur nachgerührt. Die Reaktionsmischung wird abfiltriert, und der Filterkuchen wird in mehreren Portionen mit Dichlormethan gewaschen. Das Filtrat wird bei Raumtemperatur mit wässriger Natronlauge (2 Gew%) und Wasser gewaschen. Das Lösungsmittel und die überschüssige Phenolbausteine werden anschließend destillativ entfernt.

### Synthesebeispiel 1

Hergestellt aus POCl₃ (200 Gewichtsteile), Thymol (305 Gewichtsteile), p-tert-Butylphenol (306 Gewichtsteile) und Triethylamin (441 Gewichtsteile) in CH₂Cl₂ (440 Gewichtsteile). Die Säurezahl betrug 0,4 mg KOH/g. Die Mischung betrug 24,7 Gew-% (ThymylO)₃P=O, 19,5 Gew-% (ThymylO)₂(p-tert-ButylphenylO)P=O, 30,8 Gew% (ThymylO)(p-tert-ButylphenylO)₂P=O und 25,0 Gew% (p-tert-ButylphenylO)₃P=O. Der Gehalt an Triphenylphosphat und Trikresylphosphaten betrug jeweils < 0,01 Gew%.

### Synthesebeispiel 2

Hergestellt aus POCl₃ (201 Gewichtsteile), Guajacol (261 Gewichtsteile), p-tert-Butylphenol (314 Gewichtsteile) und Triethylamin (442 Gewichtsteile) in CH₂Cl₂ (412 Gewichtsteile). Die Säurezahl betrug 1,5 mg KOH/g. Die Mischung betrug 11,8 Gew-% (GuajacylO)₃P=O, 37,4 Gew-% (GuajacylO)₂(p-tert-ButylphenylO)P=O, 38,0 Gew% (GuajacylO)(p-tert-ButylphenylO)₂P=O und 12,8 Gew% (p-tert-ButylphenylO)₃P=O. Der Gehalt an Triphenylphosphat und Trikresylphosphaten betrug jeweils < 0,01 Gew%.

### Synthesebeispiel 3

Hergestellt aus POCl₃ (200 Gewichtsteile), Guajacol (257 Gewichtsteile), Thymol (307 Gewichtsteile) und Triethylamin (440 Gewichtsteile) in CH₂Cl₂ (400 Gewichtsteile). Die Säurezahl betrug 1,0 mg KOH/g. Die Mischung betrug 20,0 Gew-% (GuajacylO)₃P=O, 35,0 Gew-% (GuajacylO)₂(ThymylO)P=O, 30,0 Gew% (GuajacylO)(ThymylO)₂P=O und 15,0 Gew% (ThymylO)₃P=O. Der Gehalt an Triphenylphosphat und Trikresylphosphaten betrug jeweils < 0,01 Gew%.

### Synthesebeispiel 4

Hergestellt aus POCl₃ (202 Gewichtsteile), Phenoxyethanol (281 Gewichtsteile), p-tert-Butylphenol (306 Gewichtsteile) und Triethylamin (441 Gewichtsteile) in CH₂Cl₂ (400 Gewichtsteile). Die Säurezahl betrug 0,4 mg KOH/g. Die Mischung betrug 10,0 Gew-% (PhenoxyethylO)₃P=O, 34,2 Gew-% (PhenoxyethylO)₂(p-tert-ButylphenylO)P=O, 39,6 Gew% (PhenoxyethylO)(p-tert-ButylphenylO)₂P=O und 16,2 Gew% (p-tert-ButylphenylO)₃P=O. Der Gehalt an Triphenylphosphat und Trikresylphosphaten betrug jeweils < 0,01 Gew%.

### Synthesebeispiel 5

Hergestellt aus POCL₃ (201 Gewichtsteile), Phenoxyethanol (281 Gewichtsteile), Guajacol (251 Gewichtsteile) und Triethylamin (440 Gewichtsteile) in CH₂Cl₂ (400 Gewichtsteile). Die Säurezahl betrug 0,4 mg KOH/g. Die Mischung betrug 7,7 Gew-% (PhenoxyethylO)₃P=O, 37,2 Gew-% (PhenoxyethylO)₂(GuajacylO)P=O, 44,4 Gew% (PhenoxyethylO)(GuajacylO)₂P=O und 10,7 Gew% (GuajacylO)₃P=O. Der Gehalt an Triphenylphosphat und Trikresylphosphaten betrug jeweils < 0,01 Gew%.

### Synthesebeispiel 6

Hergestellt aus POCL₃ (200 Gewichtsteile), Phenoxyethanol (281 Gewichtsteile), Thymol (305 Gewichtsteile) und Triethylamin (403 Gewichtsteile) in CH₂Cl₂ (407 Gewichtsteile). Die Säurezahl betrug 0,6 mg KOH/g. Die Mischung betrug 12,6 Gew-% (Phenoxy-ethylO)₃P=O, 41,7 Gew-% (PhenoxyethylO)₂(ThymylO)P=O, 34,6 Gew% (Phenoxy-ethylO)(ThymylO)₂P=O und 11,1 Gew% (ThymylO)₃P=O. Der Gehalt an Triphenylphosphat und Trikresylphosphaten betrug jeweils < 0,01 Gew%.

### Bestimmung der Zusammensetzung der Mischungen

Quantitative GC-FID-Analytik wurde mit einem Agilent GC-Gerät des Typs 7890A ausgestattet mit einer Quarzkapillarsäule des Typs CB-Sil 5 CB (Länge: 30 m, Durchmesser: 0,32 mm, Schichtdicke: 3,00 µm) durchgeführt. Als Trägergas wurde Wasserstoff verwendet. Die Injektion der Probe (gelöst in Aceton) erfolgte im Split-Modus (86:1) bei einer Temperatur von 300°C. Folgendes Temperaturprogramm wurde eingestellt: 60°C Starttemperatur, Heizrate 10°C/min bis zu einer Temperatur von 150°C, dann mit einer Heizrate von 25°C/min auf 280°C, Haltezeit: 10 min, dann mit einer Heizrate von 25°C/min auf eine Endtemperatur von 320°C/min, Haltezeit: 10 min. Die Auswertung erfolgte durch Integration des entsprechenden basisliniengetrennten Signals und Umrechnen der Peakflächen in einen Gehalt nach vorheriger Kalibration.

Die analytischen Daten der Synthesebeispiele S1 bis S6 sind in Tabelle 1 noch einmal zusammengefasst.

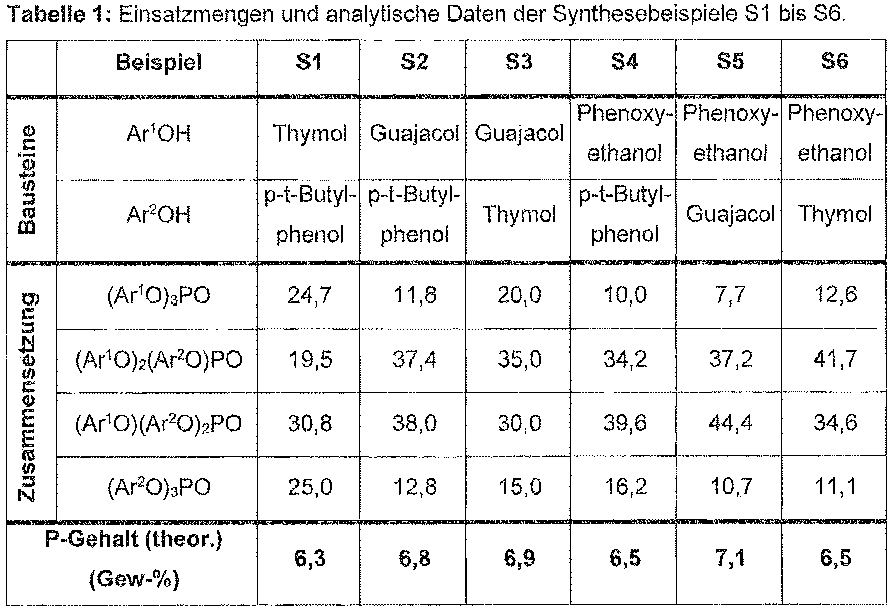

### Bestimmung der Säurezahl der Phosphorsäureester-Zusammensetzung

Die Säurezahl der Proben wurde in Anlehnung an die DIN EN ISO 2114 (Verfahren B, kolorimetrische Titration mit Phenolphthalein) durchgeführt. Dazu wurde die Probe (10 g) eingewogen, in Aceton (200 mL) und Wasser (50 mL) gelöst und mit 2-3 Tropfen einer Phenolphthalein-Lösung (0,1 Gew.-% in Ethanol/Wasser (v/v = 4/1)) versetzt. Aus einer Bürette wurde solange Natronlauge (0,1 mol/L) titriert bis der Farbumschlag von farblos zu pink für mindestens 10 Sekunden unter Rühren bestehen blieb. In gleicher Weise aber ohne Probe wurde ein Blindwert gemessen.

### Vergleichsmuster bekannter Phosphorsäurester-Zusammensetzungen

In Tabelle 2 sind bekannte Phosphorsäureester-Zusammensetzungen aufgelistet, die als Vergleichsmuster zur Herstellung von Weich-PVC eingesetzt wurden. Alle Vergleichsmuster sind Produkte der Lanxess Deutschland GmbH.

**Tabelle 2: Eingesetzte Vergleichsmuster.**

| **Vergleichsmuster** | **Alkohol-/Phenol-Komponente** | **P-Gehalt (Gew-%)** |
|---|---|---|
| Disflamoll^{®} DPK | Kresol Phenol | 9,1 |
| Disflamoll^{®} 51092 | t-Butylphenol Phenol | 8,5 |
| Reofos^{®} 65 | Isopropylphenol Phenol | 8,3 |
| Disflamoll^{®} DPO | Phenol 2-Ethylhexanol | 8,6 |

### Herstellung von Weich-PVC

Die für die Ausprüfung eingesetzten Weich-PVC-Formmassen wurden auf einem Laborwalzwerk hergestellt. Nach dem Aufgeben der Mischung aller Rezepturbestandteile (siehe Tabelle 3) beließ man diese auf der Walze bis eine Fellbildung erfolgte. Ab dem Zeitpunkt der Fellbildung wurden die Compounds noch 10 Minuten auf dem Walzwerk compoundiert und schließlich als Walzfell abgenommen. Die Walztemperatur betrug 165°C.

Die Prüfkörper zur Bestimmung des LOI wurden aus den Walzfellen mit einer Presse hergestellt. Die Presstemperatur betrug 170°C, die Pressdauer 4 Minuten zum Vorwärmen bei Niederdruck (< 10 bar) und 2 Minuten bei Hochdruck (> 100 bar). Aus den 4 mm dicken Pressplatten wurden Prüfkörper mit den Abmessungen 90 x 13 x 4 mm gesägt.

**Tabelle 3: Rezepturbestandteile zur Herstellung von Weich-PVC.**

| **Komponente** | **Funktion** | **Beschreibung** | **Menge** (Gewichtsteil e) |
|---|---|---|---|
| A | PVC | Vinnol S4170 | 100 |
| B | Co-Stabilisator | Drapex 39 | 2,5 |
| C | PVC-Stabilisator | Bärostab UBZ 780 RF | 2,5 |
| D | Flammschutzmittel | erfindungsgemäße Mischungen oder Vergleichsmuster | 55 |

| | | | |
|---|---|---|---|
| Nach dieser Vorschrift wurden PVC-Muster hergestellt. | | | |

### Bestimmung der Flammwidrigkeit

Für die Beurteilung der Flammwidrigkeit wurde der Sauerstoffindex (Limiting Oxygen Index = LOI) herangezogen. Der LOI ist ein Maß für das Brandverhalten von Kunststoffen und anderen Werkstoffen. Der LOI ist die minimale Sauerstoffkonzentration eines Sickstoff/Sauerstoff-Gemisches, unter der die Verbrennung eines Prüfkörpers unter normierten Bedingungen gerade noch stattfinden kann. Die Prüfung wurde gemäß ISO 4589-2 durchgeführt.

Die Ergebnisse der Messungen sind in Tabellen 4 und 5 zusammengefasst.

**Tabelle 4: Flammwidrigkeit von Phosphorsäuretriarylester enthaltendem PVC**

| **Beispiel** | **Flammschutzmittel (Komponente D)** | **P-Gehalt des Flammschutzmittels (Gew-%)** | **LOI** |
|---|---|---|---|
| V1 | Disflamoll^{®} DPK | 9,1 | 32,9 |
| V2 | Disflamoll^{®} 51092 | 8,5 | 32,9 |
| V3 | Reofos^{®} 65 | 8,3 | 31,4 |
| E1 | S1 | 6,3 | 31,7 |
| E2 | S2 | 6,8 | 32,1 |
| E3 | S3 | 6,9 | 31,5 |

Die Ergebnisse zeigen, dass PVC-Compounds enthaltend die bekannten Phosphorsäuretriarylester-Zusammensetzungen Disflamoll^{®}DPK, Disflamoll^{®} 51092 und Reofos^{®} 65 LOI-Werte von 31,4 bis 32,9 erreichen (Beispiele 1-3). Die erfindungsgemäßen Phosphorsäuretriarylester-Zusammensetzungen S1, S2 und S3 erreichen Werte im selben Bereich trotz ihres deutlich geringeren Phosphorgehalts (Beispiele E1 bis E3).

**Tabelle 5: Flammwidrigkeit von Phosphorsäurearyl/-alkylester enthaltendem PVC**

| **Beispiel** | **Flammschutzmittel (Komponente D)** | **P-Gehalt des Flammschutzmittels (Gew-%)** | **LOI** |
|---|---|---|---|
| V4 | Disflamoll^{®} DPO | 8,6 | 27,4 |
| E4 | S4 | 6,5 | 27,9 |
| E5 | S5 | 7,1 | 27,8 |
| E6 | S6 | 6,5 | 27,8 |

Der LOI-Wert der PVC-Compound enthaltend die gemischte Phosphorsäurearyl/-alkylester-Zusammensetzung Disflamoll^{®} DPO liegt deutlich niedriger (27,4; Beispiel V4) als bei Phosphorsäuretriarylester-Zusammensetzungen. Die erfindungsgemäßen gemischten Phosphorsäurearyl/-alkylester-Zusammensetzungen S4, S5 oder S6 erzielen jedoch höhere LOI-Werte (27,8-27,9) als Disflamoll^{®} DPO trotz niedrigerem Phosphorgehalt (Beispiele E4-E6).

Alle in Tabellen 4 und 5 aufgelisteten Weichmacher waren geeignet um Weich-PVC-Compounds herzustellen.

Da im Stand der Technik ein hoher Phosphorgehalt einer Mischung als Voraussetzung für eine hohe Flammschutzwirkung beschrieben wird (siehe z.B. WO 2017140609 A1) war es für den Fachmann überraschend, dass bei den erfindungsgemäßen Phosphorsäuretriarylester-Zusammensetzungen trotz eines deutlich geringeren Phosphorgehalts eine zu den entsprechenden Klassen (Phosphorsäuretriarylester bzw. gemischte Phosphorsäurearyl/-alkylester) vergleichbare oder sogar bessere Flammschutzwirkung erzielt werden kann.

## Patentansprüche

1. Mischungen enthaltend mindestens zwei Substanzen der allgemeinen Formel (I)
(R¹O)ₙ(R²O)ₒ(R³O)ₚP=O (I)
worin n, o und p jeweils 0, 1, 2 oder 3 sein können und die Summe von n, o und p 3 ist, und R¹, R² und R³ unabhängig voneinander ausgewählt sind aus den Resten

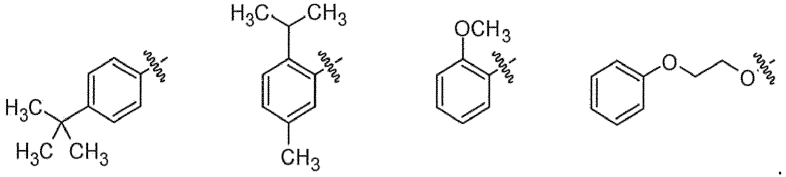

2. Mischungen gemäß Anspruch 1, wobei die zwei Substanzen mindestens einen der Reste R¹, R² oder R³ gemeinsam haben und bei mindestens einer der zwei Substanzen zwei verschiedene Reste vorhanden sind.

3. Mischungen gemäß Anspruch 1 oder 2 enthaltend mindestens zwei Substanzen der allgemeinen Formel (I)
(R¹O)ₙ(R²O)ₒ(R³O)ₚP=O (I)
worin n = 1, 2 oder 3, o = 0, 1 oder 2 und p = 0, wobei die Summe von n und o 3 ist, worin R¹ und R² die oben genannte Bedeutung haben und wobei vorzugsweise die zwei Substanzen mindestens einen der Reste R¹ oder R² gemeinsam haben und mindestens eine der zwei Substanzen zwei verschiedene Reste R¹ oder R² aufweist.

4. Mischungen gemäß einem oder mehreren der Ansprüche 1 bis 3, wobei der Gehalt an Triphenylphosphat und an Trikresylphosphaten jeweils weniger als 1 Gew.-%, bevorzugt jeweils weniger als 0,2 Gew.-%, besonders bevorzugt jeweils weniger als 0,1 Gew.-% und meist bevorzugt jeweils weniger als 0,01 Gew.-% bezogen auf das Gesamtgewicht der Mischung beträgt.

5. Mischung gemäß einem oder mehreren der Ansprüche 1 bis 4 enthaltend
(i) 0 bis 30 Gew.-% (R¹O)₃P=O,
(ii) 5 bis 90 Gew.-% (R¹O)₂(R²O)P=O,
(iii) 5 bis 90 Gew.-% (R¹O)(R²O)₂P=O, und
(iv) 0 bis 30 Gew.-% (R²O)₃P=O,
jeweils bezogen auf das Gesamtgewicht der Verbindungen (i) bis (iv), wobei R¹ und R² die oben genannten Bedeutungen haben.

6. Mischung gemäß einem oder mehreren der Ansprüche 1 bis 5 wobei der Phosphorgehalt bezogen auf die Gesamtmasse der enthaltenen Phosphorsäureester weniger als 8,0 Gew.-%, vorzugsweise weniger als 7,5 Gew.-%, weiter bevorzugt weniger als 7,2 Gew.-% beträgt.

7. Mischung gemäß einem oder mehreren der Ansprüche 1 bis 6 enthaltend ein oder mehrere von der Zusammensetzung verschiedene Flammschutzmittel und gegebenenfalls ein oder mehrere Hilfsmittel.

8. Verfahren zur Herstellung von Mischungen gemäß einem oder mehreren der Ansprüche 1 bis 7 umfassend die Umsetzung von Phenolen der Formeln R¹-OH, R²-OH und ggf. R³-OH mit POCl₃ zu Verbindungen der Formel (I).

9. Verwendung einer Mischung gemäß einem oder mehreren der Ansprüche 1 bis 7 als Flammschutzmittel, vorzugsweise als Flammschutzmittel für synthetische Polymere, Werkstoffe pflanzlichen Ursprungs oder Werkstoffe tierischen Ursprungs, besonders bevorzugt als Flammschutzmittel für Polyvinylchlorid (PVC).

10. Formmasse enthaltend eine Mischung gemäß einem oder mehreren der Ansprüche 1 bis 7 und Polyvinylchlorid (PVC).

11. Formmasse gemäß Anspruch 10, welche von 5 bis 150 Gewichtsteile, vorzugsweise von 30 bis 70 Gewichtsteile an Phosphorsäureestern der Formel (I) bezogen auf 100 Gewichtsteile PVC enthält.

12. Verwendung von Formmassen nach Anspruch 10 oder 11 zur Herstellung von Beschichtungen, Folien, Kabel, Rohrleitungen, Schläuchen, Dichtungen, Förderbändern, Dachbahnen, Klebebandfolien, Planen, Markisen oder Zelten.

13. Verwendung von Mischungen gemäß einem oder mehreren der Ansprüche 1 bis 7 als Hydraulikflüssigkeit.

14. Verwendung von Mischungen gemäß einem oder mehreren der Ansprüche 1 bis 7 als Schmierstoffadditiv.

15. Verwendung von Mischungen gemäß einem oder mehreren der Ansprüche 1 bis 7 als Additiv für Lacke, Klebstoffe, Dichtmassen oder Beschichtungen.

16. Verwendung einer Mischung gemäß einem oder mehreren der Ansprüche 1 bis 7 als Wärmeträger.
